Europäisches Patentamt

European Patent Office

Office européen des brevets

(19)

(11) **EP 1 413 638 A1**

(12) **EUROPEAN PATENT APPLICATION**
published in accordance with Art. 158(3) EPC

(43) Date of publication:
28.04.2004 Bulletin 2004/18

(51) Int Cl.⁷: **C22C 32/00**, C22C 29/14

(21) Application number: 02747717.3

(86) International application number:
**PCT/JP2002/007416**

(22) Date of filing: 23.07.2002

(87) International publication number:
**WO 2003/012155 (13.02.2003 Gazette 2003/07)**

(84) Designated Contracting States:
**AT BE CH CY DE DK ES FI FR GB GR IE IT LI LU MC NL PT SE TR**

(30) Priority: 30.07.2001 JP 2001229304
30.07.2001 JP 2001229305

(71) Applicant: **JFE Engineering Corporation Tokyo 100-0005 (JP)**

(72) Inventor: **NISHIO, Hiroaki, c/o Kokan Keisoku K.K. Kawasaki-shi, kanagawa 210-0855 (JP)**

(74) Representative: **HOFFMANN EITLE Patent- und Rechtsanwälte Arabellastrasse 4 81925 München (DE)**

(54) **MATERIAL BEING RESISTANT TO CHLORIDE−CONTAINING MOLTEN SALT CORROSION, STEEL PIPE FOR HEAT EXCHANGER COATED WITH THE SAME, AND METHOD FOR PRODUCTION THEREOF**

(57)     The invention relates to a material containing 40 to 99 wt.% Al and 1 to 45 wt.% B, and a compound containing both Al and B, bringing up strong resistance to chloride-bearing molten salt corrosion. Particularly when the material contains a continuous phase of at least one compound selected from the group consisting of $AlB_2$, $AlB_{12}$, $Al_3BC$, and $AlB_{12}C_2$, the material shows excellent corrosion resistance. A steel tube clad by the material resistant to chloride-bearing molten salt corrosion, according to the invention, is suitable to the steel tube of a heat exchanger used in a combustion furnace and a gasification furnace for municipal waste, industrial waste and coal treatment.

FIG. 5

## Description

### TECHNICAL FIELD

The present invention relates to a material that is resistant to corrosion by chloride-bearing molten salt, which generates by combusting or gasifying municipal waste, industrial waste or coal. The present invention, also, relates to a steel tube clad with a material for a heat exchanger, and relates to a method for manufacturing the material and the steel tube.

### BACKGROUND OF THE INVENTION

When municipal waste, various kinds of industrial waste such as sewage sludge, and papermaking sludge or coals are combusted or gasified, gases containing corrosive substances generate. For example, flue gas coming from incinerating the municipal waste contains ash, which consists essentially of chloride such as NaCl, KCl, $ZNCl_2$, and $PbCl_2$, and sulfide such as $Na_2SO_4$ and $CaSO_4$, as well as a chloride gas such as HCl and sulfur compound gases such as $H_2S$ and $SO_2$. At that time, the ash adheres to and deposits on the various portions in the furnace, resulted from combusting and gasifying the waste or the coal. The chlorides such as $ZnCl_2$ and $PbCl_2$, whose melting points are comparatively lower, decrease the melting point of ash. It makes easy to form chloride-bearing molten salts. The chloride-bearing molten salts generate highly corrosive chlorine gas. The chlorine gas attacks and degrades the adhered portion by the molten salts in the furnace.

General practice locates a group of steel tubes (so-called waterwall), where cooling water flows inside the steel tubes. The waterfall suppresses the temperature of the furnace wall or the gasification furnace from rising. Generally, the portion of the waterwall, which is composed of the steel tubes and which gets contact with the combustion gas flame, is covered with refractories that have strong resistance to high temperature corrosion and that makes the ash difficult to adhere to. Since the refractory possesses the characteristic that makes the ash easy to adhere to the refractory itself at the increased temperature, the refractory is requested to possess the corresponding high thermal conductivity for attaining the high water-cooling effect.

As such refractries, the following ones are used, these are, SiC-base irregular shape refractory or tile, and oxide-base chamotte refractory. The SiC-base refractory, however, has a problem that oxidation expansion begins at about 800°C, followed by induced crack generation, in some cases, the refractory separates and falls down from the furnace wall. The chamotte refractory has an inferior characteristic of very low thermal conductivity. When the chamotte is used, the expansion scarcely occurs and it scarcely happens to break the refractory. But, in this case, the ash becomes easy to adhere to the refractory.

Other than furnace walls, the ash adheres to and deposits on the exposed portion of the steel tubes of the waterwall and on the steel tubes of a heat exchanger on a boiler that recovers sensible heat of the combustion flue gas. The ash forms chloride-bearing molten salt to corrode the adhered potions. In particular, the corrosion significantly proceeds at the superheated portion of the boiler, where the gas temperature and the steam temperature are high. Consequently, in case that conventional Cr steel and Ni-Cr steel are applied to the steel tubes of the heat exchanger, the temperature of the recovered steam is limited to 300°C or below. In order to recover the high temperature and high pressure steam, above 450°C, a highly anti-corrosive steel tube of the heat exchanger is indispensable. At present, a double-tube pipe prepared by overlay welding of INCONEL 625 (21 wt.% Cr, 9 wt.% Mo, 4 wt.% Nb, and 62 wt.% Ni) around the outer face of the inner steel tube is supposed to be suitable for an anti-corrosive material. However, in case that such a double tube are applied to, the durability is short, half a year to two years, if the temperature of the surface of the pipes exceeds 500°C.

Regarding the point, JP-A-7-146091, (the term "JP-A" referred herein signifies "Unexamined Japanese patent publication"), discloses a steel tube of heat exchanger having strong resistance to chloride-bearing molten salt corrosion. Here, the steel tube is prepared by spraying an undercoat thermally and successively. The sprayed undercoat is, first, containing 50 to 85 wt.% Ni, and second, 15 to 50 wt.% Cr. And third, Al is sprayed as a topcoat. From one aspect of view, the dense oxide coating of Al topcoat inhibits the corrosive gas from invading into the inside of the tube. However, it has, indeed, been reported that the durability of the Al topcoat is short in the municipal waste incineration furnace practically. (Bulletin of 13th National Municipal Cleaning Study Lecture Meeting, February 2, 1999). That is, if the sole Al is exposed to the molten salt, in which both $Cl_2$ and $O_2$ are co-existing, the Al is chlorinated and volatilized, simultaneously with the Al being oxidized. The Al forms an oxide coating, which is porous and easy to be spalled. And, such oxidized coating repeats being generated and being spalled. As a result, the Al continues to be consumed gradually, simultaneously with chlorinatedly volatilizing. Finally, the thermally sprayed film of the Al ends up in being consumed up, for a short while.

JP-A-2001-56195 discloses a steel tube of a heat exchanger, prepared by cladding a heat-resistant alloy tube with a ceramics-metal composite material. The metal of Al and the ceramics of AlN, AlON, and the like are applied to such a composite material. This composite material forms a dispersed structure of the ceramics such as AlN and AlON in the Al matrix. Since alumina generated in a corrosive atmosphere binds with the AlN, AlON, and the like, it is not easy to spall. Nevertheless, the material proceeds to degrade rapidly at temperature of above 600°C, because of the Al being chlorinatedly volatilized.

From another point of view, the ash adhered to and deposited on the steel tube of the heat exchanger degrades the heat transfer performance of the tube. So, soot blowing is intermittently done. In the soot blowing process, the highly pressurized steam is ejected into the heat exchanger, in order to prevent the ash from adhering to the tube. The soot blowing, however, removes not only the adhered ash but also the formed protective coating, so that reducing the thickness of the steel tube proceeds to shorten the durability of the total tube. From this point of view, there may be a case that a proposed method to decrease the impact of steam by locating an INCONEL 625 anti-erosion plate. However, the durability of the anti-erosion plate is two years at maximum.

As described above, there have not been any countermeasures to protect the steel tubes of the heat exchanger for the waterwall generated by combusting or gasifying the municipal waste, industrial waste or coal.

## SUMMARY OF THE INVENTION

An object of the present invention is to provide a material that has strong resistance to corrosion of chloride-bearing molten salt, which is generated by combusting or gasifying municipal waste, industrial waste or coals, a steel tube of a heat exchanger clad with the material. And the present invention provides a method for manufacturing the material and the steel tube.

The object is attained by a material resistant to chloride-bearing molten salt corrosion, comprising 40 to 99 wt.% Al, 1 to 45 wt.% B, and a compound containing Al and B such as $AlB_2$, $AlB_{12}$, $Al_3BC$, and $AlB_{12}C_2$.

The material resistant to chloride-bearing molten salt corrosion is manufactured by the steps of: preparing a mixture of Al with at least one compound selected from the group consisting of $B_4C$, $B_2O_3$, and $CaB_6$; and heating the mixture in an inert atmosphere to temperatures of 600°C to 1,200°C.

Furthermore, a steel tube of heat exchanger clad by the material resistant to chloride-bearing molten salt corrosion is manufactured by the steps of: positioning an Al tube around an inner steel tube, whose Al tube has a larger inner diameter than an outer diameter of the inner steel tube; filling a mixture of Al and at least one compound selected from the group consisting of $B_4C$, $B_2O_3$, and $CaB_6$ between the steel tube and the Al tube; and heating the steel tube and the Al tube filled with the mixture in a nitriding gas atmosphere to temperatures of 600°C to 1,200°C.

## BRIEF DESCRIPTION OF THE DRAWINGS

Fig. 1 is a longitudinal cross section of the steel tube and the Al tube filled with a mixture of boride and Al, viewed from the axial direction of the steel tube.

Fig. 2 is a lateral cross sectional view of Fig. 1.

Fig. 3 is a longitudinal cross section of the steel tube and the Al tube filled with the mixture, of Fig. 1, after heated and cooled, viewed from the axial direction of the steel tube.

Fig. 4 is a lateral cross sectional view of Fig. 3.

Fig. 5 is a longitudinal cross section of a square steel tube of heat exchanger, as an example according to the present invention.

Fig. 6 is a lateral cross sectional view of Fig. 5.

Fig. 7 is a longitudinal cross section of a circular steel tube of a heat exchanger, as another example according to the present invention.

Fig. 8 is a schematic drawing of the material resistant to chloride-bearing molten salt corrosion, clad on the steel tube, as one example according to the present invention.

Fig. 9 is a schematic drawing of the material resistant to chloride-bearing molten salt corrosion, clad on the steel tube, as another example according to the present invention.

## DESCRIPTION OF THE PREFERRED EMBODIMENT

The inventors of the present invention found the materials having strong resistance to the corrosion occurred by chloride-bearing molten salt, which is generated in combusting industrial waste or coals in furnaces. And it is found that a compound containing both Al and B forms a very dense Al oxide coating on the surface of the compound under an atmosphere where the chloride-bearing molten salt scattered accompanied with the gas flow. Al oxide coating prevents $Cl_2$ and $O_2$ from invading. From this point of view, the material of the present invention is an excellent material to avoid the material corrosion caused by the chloride-bearing molten salt.

A mechanism for forming the dense Al oxide coating is conceived as follows. As described above, when Al is exposed to an atmosphere, in which both $Cl_2$ and $O_2$ are coexisting, the chlorinating volatilization of Al, (forming $AlCl_3$), and the oxidation of Al, (forming $Al_2O_3$), proceed simultaneously, thus forming a porous oxide coating on the surface of the Al. With the coexistence of B, the chlorinating volatilization of B, (forming $BCl_3$), and the oxidation of B, (forming $B_2O_3$), proceed in parallel. The generated $B_2O_3$ has a low melting point, 450°C, so that the $B_2O_3$ forms a liquid film to fill the pores on the surface. As a result, the oxide coating formed on the surface becomes very dense. The liquid film of $B_2O_3$ finally reacts with adjacent $Al_2O_3$ to become a composite oxide (such as $Al_4B_2O_9$) to form a protective film, or reacts with Al that exists in the inner portion of the material. In this case, it becomes boride (such as $AlB_2$).

The material resistant to chloride-bearing molten salt corrosion is required to contain a compound having both Al and B, and is required to contain 40 to 99 wt.% Al and 1 to 45 wt.% B. If the Al content is less than 40 wt.%, the formed Al oxide coating is not enough to provide corrosion resistance. On the contrary, if the Al content exceeds 99 wt. %, the B content becomes insufficient, which fails to form the dense oxide coating. If the B content is less than 1 wt.%, the formed liquid film of $B_2O_3$ becomes insufficient to fail in forming the dense oxide coating. If the B content exceeds 45 wt.%, the excess amount of the liquid film of $B_2O_3$ induces the ash to adhere. In the exemplary embodiment, a more preferable range of B is 3 to 30 wt.%.

The compound containing both Al and B preferably has a continuous phase in order to increase the high temperature strength of the material.

Other than the compound containing both Al and B, the material resistant to chloride-bearing molten salt corrosion may contains Al phase and B phase respectively and independently. In particular, the Al phase, which has high ductility, is effective on improving the ductility of the material and the characteristic of the impact strength of the material. In such a case, even when the temperature of the material exceeds the melting temperature of Al, (around 660°C), Al is not fluidized on the condition that the continuous phase of the compound containing both Al and B is formed. The Al phase may contain AlN, $Al_4C_3$, $Al_2O_3$, $MgAl_2O_4$, and $Al_2Ca$, if the Al content is not more than 50 vol. %. Furthermore, BN and $B_4C$ may exist in the B phase.

In the exemplary embodiment, the compound containing both Al and B are boride such as $AlB_2$, $AlB_{10}$, and $AlB_{12}$, boroxide such as $Al_4B_2O_9$ and $Al_{18}B_4O_{33}$, and borocarbide such as $Al_2B_{51}C_8$, $Al_3BC$, $Al_8B_4C_7$, $AlB_{12}C_2$, $AlB_{24}C_4$, $AlB_{13}C_4$, $Al_3B_{48}C_2$, $AlB_{48}C_2$, and $AlB_{40}C_4$. In order to form the continuous phase, a preferable one is at least one compound selected from the group consisting of $AlB_2$, $AlB_{12}$, $Al_3BC$, and $AlB_{12}C_2$, and particularly a compound of $AlB_2$ and $Al_3BC$ is preferred.

The material resistant to chloride-bearing molten salt corrosion may contain the following component, if the content is equal to or less than 50 vol.%. That is, the contents are metals such as Mo, Ti, Nb, Co, Ta, and Si, oxide such as $Cr_2O_3$, $SiO_2$, $ZrO_2$, $TiO_2$, MgO, $CaO2B_2O_3$, $CaOB_2O_3$, $2Al_2O_3B_2O_3$, $3Al_2O_34B_2O_3$, $9Al_2O_32B_2O_3$, $3Al_2O_32SiO_2$, $Al_2O_3TiO_2$, $MgOCr_2O_3$, $Zr_2O_3SiO_2$, and $2MgOSiO_2$, nitride such as TiN and ZrN, many kinds of oxynitride generally called AlON and SiAlON, carbide such as SiC, $Cr_3C_2$, TiC, and ZrC, boride such as CrB, $CrB_2$, $TiB_2$, $ZrB_2$, $CaB_6$, and $MgB_2$, and silicate such as $MoSi_2$ and $WSi_2$. The reason why the limitation is 50 vol.% or less is to prevent the metal from degrading the corrosion resistance. And the additional reason is to prevent the ceramics from breaking by the brittle fracture.

According to the present invention, the material resistant to chloride-bearing molten salt corrosion is manufactured by the steps of: preparing a mixture of Al with at least one compound selected from the group consisting of $B_4C$, $B_2O_3$, and $CaB_6$; and heating the mixture in an inert gas atmosphere to temperature of 600°C to 1,200°C.

The material resistant to chloride-bearing molten salt corrosion may be usable for the formed plate or for the formed pipe, and is also applied to the cladding material on a device, effectively.

The following is one example of the exemplary embodiments.

Aluminum powder and $B_4C$ powder are mixed together, and a determined quantity of the mixture is filled with in a hot-press mold. Here, the mold is made of graphite and a die lubricant is coated in advance. The hot press mold is located in a heat-treatment furnace. After evacuating the furnace, Ar gas is introduced into the furnace. A determined load is applied on the powder-packed layer, using the upper part of the hot press mold and a punch that forms the lower part. Keeping the situation, the packed layer is heated to a determined temperature between 600°C and 1,200°C . When a determined time passes, the heat releases to cool down. Then, the load is released, and the Ar gas stops flowing, the hot press mold is disassembled to take out the packed product. In the above-mentioned way, the material resistant to chloride-bearing molten salt corrosion having a specific shape is obtained.

At the procedure, the following reaction occurs.

$$9Al + 2B_4C \rightarrow 3AlB_2 + 2Al_3BC$$

As a result, the material forms a continuous phase of $AlB_2$ and of $Al_3BC$. The formed materials are the compounds containing both Al and B.

When Al is added exceeding the stoichiometric amount according to the chemical reaction formula, the Al phase happens to exist. The existence of Al phase causes to form a twined structure among the continuous phase of $AlB_2$, the continuous phase of $Al_3BC$, and the continuous phase of Al. The twined structure enables the material to improve ductility. On the contrary, when the Al amount is added, which is equal to or lower than the stoichiometric amount, the $B_4C$ phase remains to disperse in the continuous phase of $AlB_2$ and of $Al_3BC$. Such dispersion enables the material to improve rigidity and heat resistance. In such a way, the applicable characteristics of the material are obtained, being influenced by the mixing rate of Al to $B_4C$.

Furthermore, Borides other than $B_4C$ is applied to the present invention.

When $B_2O_3$ reacts, the following reaction formula occurs.

$$3Al + B_2O_3 \rightarrow AlB_2 + Al_2O_3$$

When $CaB_6$ reacts, the following reaction formula occurs.

$$5Al + CaB_6 \rightarrow 3AlB_2 + CaAl_2$$

When B reacts, the following reaction formula occurs.

$$Al + 2B \rightarrow AlB_2$$

In order to form the continuous phase of $AlB_2$, it is required to treat the material at temperature of 600°C or more. It is preferably required to treat the material at temperature of 630°C or more, where Al starts melting at 630°C. Furthermore, equal to or higher temperature of 660°C is more preferable, which is the Al melting point, from the standing point of making the material into a dense state and enhancing the corresponding reaction.

If the temperature exceeds 980°C, $AlB_{12}$ or $AlB_{10}$ is generated. Both of the compounds are effective on the corrosion resistance. However, if the temperature exceeds 1,200°C, problems arise such as degrading the dynamic characteristics of the steel tube itself, when, for example, the material is applied to cladding the outer surface of the steel tube.

Compounds containing both Al and B, for example, $AlB_2$, $AlB_{10}$, $AlB_{12}$, and $Al_3BC$ are used as the base material. But, reacting Al with B is more preferable, from the viewpoint of forming the continuous phase of the compound containing both Al and B.

When a steel tube is clad with such types of the material resistant to chloride-bearing molten salt corrosion, the steel tube of a heat exchanger is obtained, which has strong resistance to the corrosion of chloride-bearing molten salt. (The chloride-bearing molten salt generates by combusting or gasifying municipal waste, industrial waste or coals.)

The kinds of steel for the materials may be submitted to the steel tube, such as those made of carbon steel, Cr steel, and Cr-Ni steel. From the viewpoint of heat resistance, Cr steel and Cr-Ni steel are more preferable. Applicable Cr steel may be known to the world, which contains 5 to 30 wt.% Cr. Applicable Cr-Ni steel may be known to the world, which contains 10 to 30 wt.% Cr and 8 to 35 wt.% Ni. Concerning the steel pipe mentioned above, the steel may further contain Mo, Ti, Si, Al, Nb, Co, Ta, and the like. In particular, 18 wt.% Cr - 8 wt.% Ni steel is a general applicable steel material, which is preferable.

According to the present invention, the steel tube of the heat exchanger may induce the Al to diffuse into the base metal of the steel tube. Here, the Al is existing in the material resistant to chloride-bearing molten salt corrosion. And the material is the cladding steel tube. In this case, such diffusion has a possibility to cause to form an intermetallic compound of Fe-Al at the boundary area between the base metal of the steel tube and the Al. Therefore, cracks may sometimes occur along the boundary area during heating and cooling the material. From the viewpoint of such apprehension, it is preferable that a separation layer is located between the steel tube and the material resistant to chloride-bearing molten salt corrosion.

Applicable separation layer comprises oxide such as $Al_2O_3$, $Cr_2O_3$, $SiO_2$, $ZrO_2$, $TiO_2$, and MgO, which are difficult to react with Al and Fe. Such composite oxide, or $3Al_2O_3 2SiO_2$, $Al_2O_3 TiO_2$, $NgOAl_2O_3$, $MgOCr_2O_3$, $Zr_2O_3 SiO_2$, $2MgOSiO_2$, and the like may also be applicable to the practicality. Cladding formation is done for $Al_2O_3$ by applying boehmite sol. Cladding formation is done for $SiO_2$ by applying hydrolysis decomposition liquid of methyl silicate or ethyl silicate, or by applying $SiO_2$ precursor of $SiO_2$, such as water glass. Binding oxide powder with an inorganic binder such as water glass may do the cladding formation.

Other than the above-given oxides, the separation layer may use carbide such as SiC and nitride such as $Si_3N_4$, AlN, and BN. The SiC layer is formed by binding the SiC powder with an inorganic binder or by applying a polycarbosilane solution, which is a derivative of organic silicon compound, onto the other surface of the steel tube, followed by drying and thermally decomposing the solution. Binding these powders with an inorganic binder or using a liquid precursor of polysilazane or the like forms the Si3N4 and BN layers. These carbides and nitrides may be combined with the above-mentioned oxides.

Among the separation layers, $Al_2O_3$, $Cr_2O_3$, $SiO_2$, SiC, $Si_3N_4$, AlN, and BN are preferred. In particular, BN does not react with Fe and Al, and has lubrication function, so that the BN is preferable in reducing the sliding resistance at the boundary area between the steel tube and the cladding during heating and cooling the material. In order to perform the BN features, 20 wt.% or higher content of BN in the layer is preferable.

If the BN content is less than 50 wt.%, other ceramics or at least one metal selected from the group consisting of Al, Cu, Fe, Cr, Ni, Mo, Ti, Si, Nb, Co, and Ta may further exist in the separation layer.

The present invention discusses how to form the separation layer, as well as other methods similar to the described one. For instance, coat-type, chemical vapor deposition, physical vapor deposition, plasma spray, attaching, or the like are applied to. Particularly, the attaching method is simple because the sleeve-shape flexible material is attached to the surface of the steel tube by winding around the pipe to prepare a single layer or double layer. For example, an aluminum foil having an $Al_2O_3$ film is wound around the steel tube to fix the foil and the tube together. Then the $Al_2O_3$ film forms the separation layer. If a ceramic fiber woven cloth is wound around the steel tube to fix the foil and the tube together, or the steel tube is inserted into a cylindrical knit of ceramic fiber, or a braided sleeve, to fix the foil and the tube together, the separation layer is formed. Applicable material of the ceramic fiber comprises E-glass, silica, alumina, mullite, and aluminum borate.

In the exemplary embodiment, the steel tube of the heat exchanger resistant to chloride-bearing molten salt corrosion, is manufactured by the steps of: positioning an Al tube around an inner steel tube, which Al tube having a larger inner diameter than an outer diameter of the inner steel tube; filling a mixture of Al and at least one compound selected from the group consisting of $B_4C$, $B_2O_3$, and $CaB_6$ between the steel tube and the Al tube; and heating the steel tube and the Al tube with the filled mixture in a nitriding gas atmosphere to temperature of 600°C to 1,200°C.

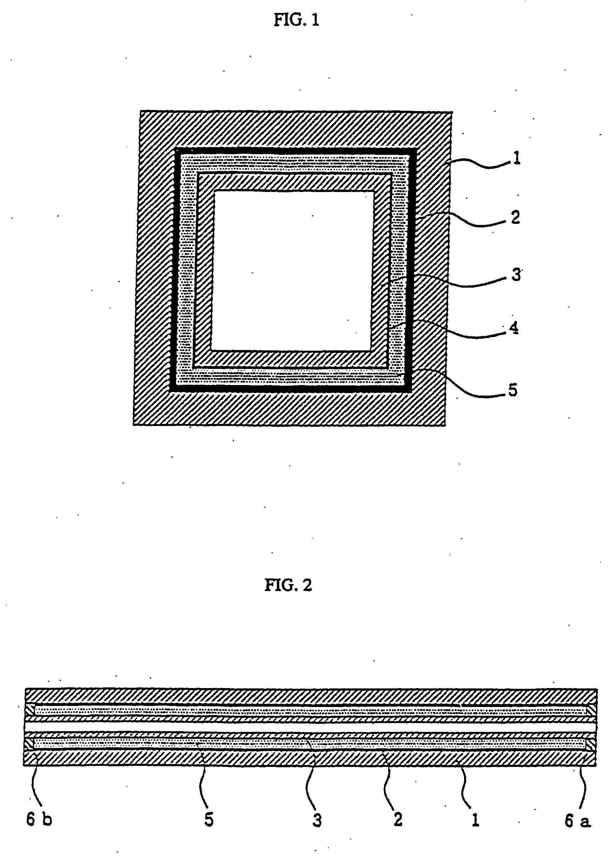

The detail of the method for manufacturing the steel tube of the heat exchanger is described in detail, referring to Figs. 1-7 in the following.

Fig.1 is a longitudinal cross section of the steel tube and the Al tube filled with the mixture of boride and Al, viewed from the axial direction of the steel tube. Fig. 2 is a lateral cross sectional view of Fig. 1.

A braided E-glass sleeve as the separation layer 4 is attached to the outer surface of a steel tube 3. Then, an Al tube 2 having an inner diameter larger than an outer diameter of the steel tube 3 is located outside the outer periphery of the steel tube 3 encasing the steel tube 3. A powder containing a boride such as $B_4C$ and Al is poured in the gap between the steel tube 3 and the Al tube 2 to be filled with and to form a powder packed layer 5. On filling the gap with the powder, one end of the gap is closed by an inorganic blanket 6a having porous and flexible structure, while filling the gap from the other end with the powder to form the powder packed layer 5. After filling the gap with the powder, the open end is closed by an inorganic blanket 6b.

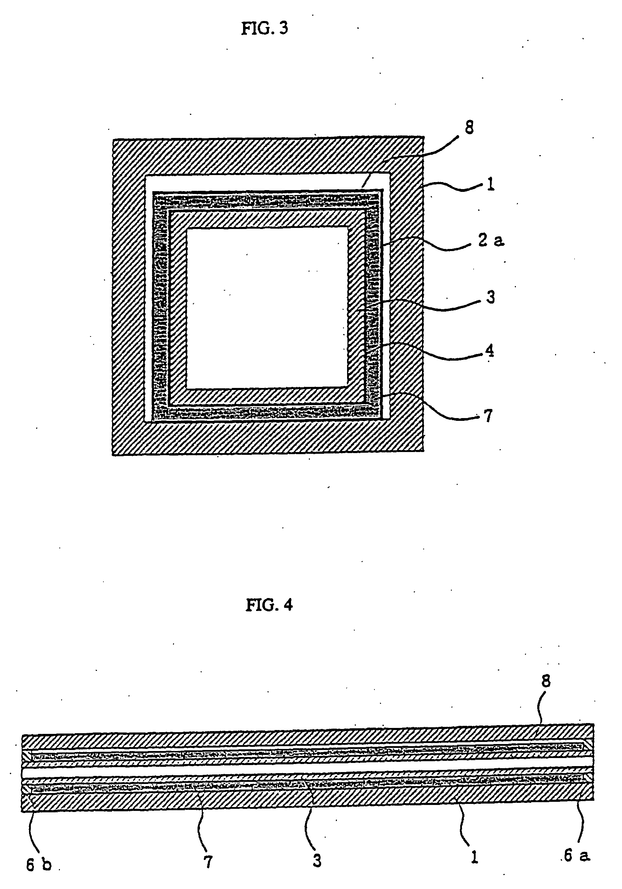

Next, the integrated unit of the steel tube 3 and the Al tube 2 with the powder packed layer 5 is placed into a fixing container for fixing, which container is then introduced into a furnace. The furnace is evacuated by a vacuum pump, and then the atmosphere in the furnace becomes a nitriding atmosphere by introducing nitrogen gas into the furnace. By heating, the atmosphere becomes the temperature exceeding the Al melting point (around 660°C). And the temperature is kept in the state for a determined period. During the period, the Al tube 2 melts to penetrate into the powder packed layer 5. The molten Al coming from the tube and the molten Al coming from the powder react with $B_4C$ to form a continuous phase of $AlB_2$ and of $Al_3BC$, thus forming a cladding layer 7 as shown in Figs. 3-4. A part of the molten Al nitrides to become AlN, which exists in the cladding layer 7 as a dispersed phase.

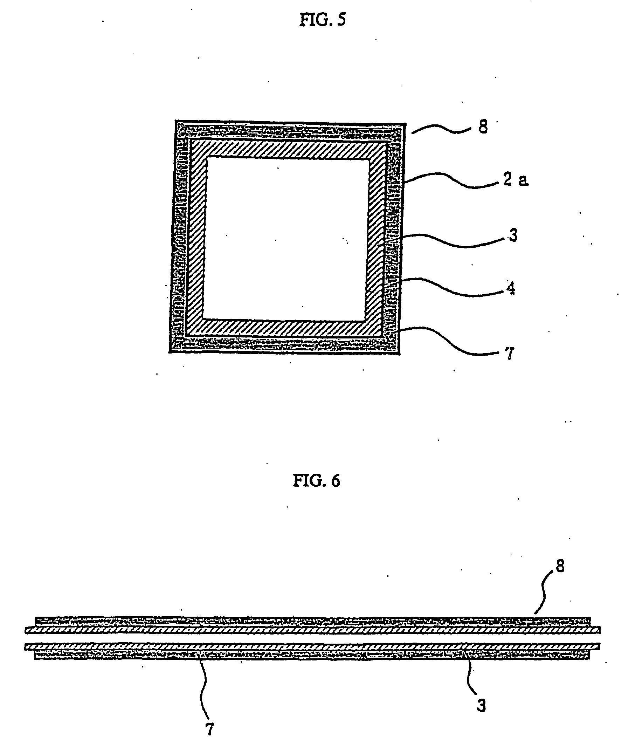

After releasing the heat and cooling, the packed material is taken out from the furnace, and the fixing container 1 is disassembled to obtain a clad steel tube 8 having strong resistance to chloride-bearing molten salt corrosion, as shown in Fig. 5 and Fig. 6. Since the outer diameter of the clad steel tube 8 is smaller than the inner diameter of the fixing container 1, and is almost equal to the inner diameter of the Al tube 2, a gap is formed between the fixing container and the Al tube after being heated. This is shown in Fig.3 and Fig.4. Consequently, the gap enables the clad steel tube 8 to be taken out easily from the fixing container 1.

The heating temperature is required to be within a range of 670°C to 1,200°C, which is equal or higher the Al melting point. Within such a range, mechanical characteristics of steel tube 3 are not damaged.

The nitriding atmosphere is required to suppress oxidizing Al and to enhance nitriding Al. Nitrogen gas and ammonia decomposed gas are used to establish the nitriding atmosphere. When the nitrogen gas is used, the gas pressure is preferably within a range of 0.05 to 1 MPa in absolute pressure. If the gas pressure exceeds the upper limit of the range, the exothermic nitridation of Al heats the packed material in an unusual way, which induces the melted Al to eject from the fixing container and which induces the steel tube 3 to deform and melt.

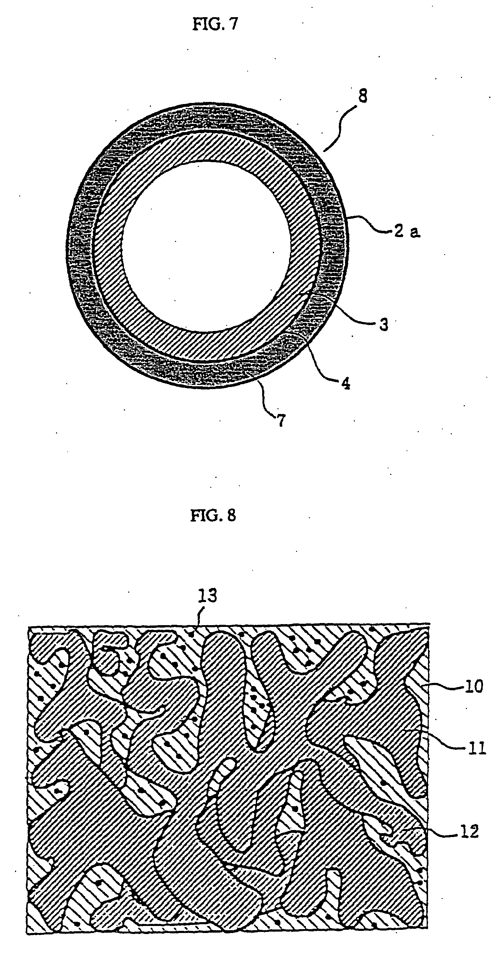

The cross sectional shape of the steel tube 3 and of the Al tube 2 determines the cross sectional shape of the clad steel tube 8. That is, if both of the steel tube 3 and the Al tube are in square shape, a square clad steel tube 8 is obtained as shown in Fig. 3. If both are in circular shape, a circular clad steel tube 8 is obtained as shown in Fig. 7. Other than the above-mentioned shapes, various cross sectional shapes of the clad steel tube are formed.

The thickness of the separation layer 4 is preferably 0.05 to 1 mm. The thickness less than 0.05 mm makes it difficult to attain a sufficient cladding. The thickness exceeding 1 mm induces the heat transfer resistance of the cladding to become larger, which hinders exchanging the heat.

The thickness of the cladding layer 7 is preferably 2 to 10 mm. The thickness less than 2 mm makes it difficult to prevent the corrosive gas and molten salt from invading into the steel tube for a long period. The thickness exceeding 10 mm makes the heat transfer resistance easy to become larger. So, exchanging the heat is hindered.

Up to the degree of the Al melting temperature, the fixing container 1 supports the aluminum tube 2. At temperature of Al melting point or above, the fixing container 1 prevents the large portion of the molten Al from flowing out. If the fixing container 1 reacts with the molten Al, the treated material adheres to the fixing container 1 to become difficult to separate the treated material and the fixing container 1 each other. And the fixing container 1 becomes difficult to be used repeatedly. Therefore, it is preferable that the fixing container 1 is made of oxide such as $Al_2O_3$, $SiO_2$, $ZrO_2$, $Al_2O_3TiO_2$, and $MgOAl_2O_3$, boride such as $TiB_2$, $ZrB_2$, $CrB$, and $CrB_2$, nitride such as $Si_3N_4$ and BN, and carbide such as SiC. Graphite reacts with molten Al. Graphite, however, is used for the fixing container 1 by applying a cladding consisting essentially of the above-described ceramics onto the inner surface, which gets contact with the molten Al.

The Al tube 2 and the steel tube 3 are not always located in the coaxial direction. In case that the tubes are not located in the coaxial direction, the thickness of the cladding layer 7 becomes uneven. But, the uneven thickness of the cladding layer 7 causes no problem, on the condition that the cladding is perfect.

Magnesium, which possesses the characteristic of promoting melting the Al tube 2 to penetrate into the powder packed layer 5, may be added as an alloying component of the Al tube 2. Small amount of Mg powder may be added to the packed $B_4C$ powder and Al powder. In such cases, the added amount of the Mg powder is 4 weight parts to 100 weight parts of the original powder material excluding the Mg powder.

Fig. 8 is a schematic drawing of the material resistant to chloride-bearing molten salt corrosion, clad on the steel tube, as one example according to the present invention.

The Al continuous phase 10, the $Al_3BC$ continuous phase 11 and the $AlB_2$ continuous phase 12 are entangled to each other to form a matrix. In the matrix, the AlN dispersed phase 13, which is generated by nitriding a part of the molten Al exists.

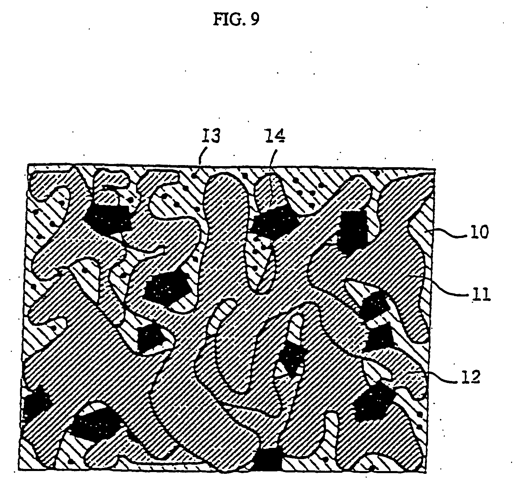

Fig. 9 shows one example of further adding SiC powder. In addition to the above-mentioned dispersed phase, the SiC dispersed phase 14 exists.

Example 1

A 100 g of powder previously prepared by mixing 70 wt.% of -200 mesh Al powder and 30 wt.% of -325 mesh $B_4C$ powder was filled with into a graphite hot press jig. The jig was coated with a BN paint at the portions getting contact with the powder, and was dried. The jig was mounted to a hot press. After evacuating the hot press, Ar gas was introduced into, to keep the gas pressure at 0.1 kg/cm$^2$G. A load of the hot press was determined to be 4 ton. The hot press was heated to the degree of temperature of 630°C. The temperature rise speed was 15°C /min, and was kept in the state for 5 hours. Afterwards, cooling was done. And then, the hot press was disassembled to obtain a sample having a disc shape.

In order to make the sample further dense and in order to promote the reaction between Al and $B_4C$, the sample was placed in a graphite crucible, whose crucible was then placed in a heat treatment furnace. After evacuating the furnace, Ar gas was introduced into the furnace to keep the gas at pressure 0.1 kg/cm$^2$G. Then the crucible was heated until the degree of 700°C. The speed for rising the temperature is 15°C/min. The sample was kept in such a state for 5 hours. In this way, solution treatment was done.

The treated and applied sample was subjected to element analysis, identifying crystal phase by XRD, acid treatment test, and molten salt corrosion test.

Regarding the acid treatment test, the sample was immersed in a 17 wt.% hydrochloric acid solution for 240 hours to elute the acid-dissolving matter such as Al. Then the sample was washed with water, and was dried at 110°C for 2 hours to determine the mass loss. By the test, it was confirmed whether or not the sample became a porous material that could keep the undissolved and remained $AlB_2$ in acid, as the porous shape. That is, whether or not the $AlB_2$ became a continuous phase.

In the molten salt corrosion test, the sample was heated until the degree of 750°C in atmosphere at the speed for rising the temperature is 15°C/min, together with an ash containing NaCl, KCl, $ZnCl_2$, $PbCl_2$, and the like to 8 wt. % as Cl content, whose ash was sampled from a municipal waste incinerator. The sample with ash was kept at the temperature for 144 hours. Afterwards, the sample was cooled. Then, the visual inspection was done, concerning how much degree the corrosion proceeded.

The result is shown in Table 1.

The sample contained 23.5 wt.% B and 69.5 wt.% Al. Boron existed as compounds of $AlB_2$ and $Al_3BC$.

The mass loss resulted from the acid treatment test was as large as 60.3 wt.%. Nevertheless, the sample was porous material, and the remained $AlB_2$ as a main remaining compound formed a continuous phase. It was also observed that $Al_3BC$ formed a continuous phase similar with the case of $AlB_2$, though the $Al_3BC$ dissolves in acid.

From the viewpoint of the visual inspection, the sample did not suffer from changing in appearance, after the sample was dealt with the molten salt corrosion test. And no abnormality was found out on the cutting portion. The sample is conceived to have extremely high corrosion resistance to the chloride-bearing molten salt, because of the existence of the continuous phase of $AlB_2$ and $Al_3BC$.

Example 2

A 100 g of powder prepared by mixing 95 wt. % of -200 mesh Al powder and 5 wt. % of -325 mesh $B_4C$ powder was hot-pressed in the same procedure as Example 1, in order to obtain a sample having a disc shape.

The disc sample was subjected to solution treatment, as same as Example 1, and was subjected to the tests as same as Example 1.

The result is shown in Table 1.

The sample contained 3.9 wt.% B and 94.4 wt.% Al. Boron existed as the compounds of $AlB_2$ and $Al_3BC$.

The mass loss resulted from the acid treatment test was as large as 92.2 wt.%. Nevertheless, the sample was porous material, and the remained $AlB_2$ as a main remaining compound formed a continuous phase. It is also conceived that $Al_3BC$ formed a continuous phase similar to the case of $AlB_2$, though the $Al_3BC$ dissolves in acid.

After the molten salt corrosion test, no change happened in appearance, and no abnormality was found out on the cutting portion. The sample was conceived to have extremely high corrosion resistance to the chloride-bearing molten salt, owing to the existence of continuous phase of $AlB_2$ and of $Al_3BC$.

Example 3

A 100 g of powder prepared by mixing 70 wt.% of -200 mesh Al powder and 30 wt.% of -325 mesh $B_4C$ powder was hot-pressed in the same procedure as Example 1, in order to obtain a sample having a disc shape. The atmospheric condition of the hot press was, however, $N_2$ gas instead of Ar gas.

The disc sample was subjected to solution treatment as the same as Example 1, and was subjected to the tests as the same as Example 1.

The result is shown in Table 1.

The sample contained 22.7 wt.% B and 67.1 wt.% Al. Boron existed as the compounds of $AlB_2$ and $Al_3BC$. One portion of Al existed as AlN.

The mass loss resulted from the acid treatment test was as large as 51.6 wt.%. Nevertheless, the sample was porous material, and the remained $AlB_2$ as a main remaining compound formed a continuous phase. It is also conceived that $Al_3BC$ formed a continuous phase similar with the case of $AlB_2$, though the $Al_3BC$ dissolves in acid.

After the molten salt corrosion test, the sample suffered from no change in appearance, and no abnormality was found on the cutting portion. The sample is conceived to have extremely high corrosion resistance to the chloride-bearing molten salt, owing to the existence of continuous phase of $AlB_2$ and of $Al_3BC$, and owing to the existence of AlN.

Example 4

A 100 g of powder prepared by mixing 70 wt.% of -200 mesh Al powder and 30 wt.% of -325 mesh $B_2O_3$ powder was hot-pressed in the same procedure as Example 1, in order to obtain a sample having a disc shape.

The disc sample was subjected to solution treatment as the same as Example 1, and was subjected to the tests as the same as Example 1.

The result is shown in Table 1.

The sample contained 9.3 wt.% B and 69.5 wt.% Al. Boron existed as the compounds of $Al_4B_2O_7$ and $Al_6B_8O_2$. One portion of Al existed as AlN.

The mass loss resulted from the acid treatment test was as large as 55.0 wt.%. Nevertheless, the sample was porous material, and the remained $AlB_2$, $Al_4B_2O_7$, and $Al_6B_8O_2$ formed the continuous phases, respectively.

The sample after the molten salt corrosion test, no sample suffered from change in appearance, and no abnormality was found on the cutting portion. The sample is conceived to have extremely high corrosion resistance to the chloride-bearing molten salt, owing to the existence of the continuous phase of $AlB_2$, $Al_4B_2O_7$, and $Al_6B_8O_2$.

Example 5

A 100 g of powder prepared by mixing 50 wt.% of -200 mesh Al powder, 20 wt.% of -325 mesh $B_4C$ powder, and 30 wt.% of -200 mesh SiC powder was hot-pressed as theame procedure as Example 1 to obtain a disc shape sample.

The disc sample was subjected to solution treatment as the same as Example 1, and was subjected to the tests as the same as Example 1.

The result is shown in Table 1.

The sample contained 15.7 wt.% B and 49.7 wt. % Al. Boron existed as compounds of $AlB_2$ and $Al_3BC$.

The mass loss resulted from the acid treatment test was as large as 42.5 wt.%. Nevertheless, the sample was porous material, and the remained $AlB_2$ and $Al_3BC$ as main remaining compounds formed the respective continuous phases.

In the sample after the molten salt corrosion test, no change was found in appearance, and no abnormality was found on the cutting portion. The sample is conceived to have extremely high corrosion resistance to the chloride-bearing molten salt owing to the existence of the continuous phase of $AlB_2$ and $Al_3BC$ and the existence of SiC.

Example 6

A 100 g of powder prepared by mixing 50 wt.% of -200 mesh Al powder, 20 wt.% of -325 mesh $B_4C$ powder, and 30 wt.% of -200 mesh BNC powder was hot-pressed in the same procedure as Example 1, in order to obtain a sample having a disc shape. The BNC powder was a composite powder of BN, $B_4C$, C, and the like, prepared by sintering BN with $B_4C$ and C as the main binders, then by grinding, giving the composition of 64.4 wt.% BN, 23.2 wt. % $B_4C$, 7.7 wt.% C, and 4.7 wt.% AlN.

The disc sample was subjected to solution treatment as the same as Example 1, and was subjected to the tests as the same as Example 1.

The result is shown in Table 1.

The sample contained 29.5 wt.% B and 50. 6 wt.% Al. Boron existed as the compounds of $AlB_2$, $Al_3BC$, BN and $B_4C$.

The mass loss resulted from the acid treatment test was as large as 49.6 wt.%. Nevertheless, the sample was porous material, and the remained $AlB_2$ and $Al_3BC$ as main remaining compounds formed the respective continuous phases.

The sample, after the molten salt corrosion test, showed no change in appearance, and no abnormality was found on the cutting portion. The sample is conceived to have extremely high corrosion resistance to the chloride-bearing molten salt, owing to the existence of continuous phase of $AlB_2$ and of $Al_3BC$ and the existence of BN, $B_4C$, and AlN.

Example 7

A 100 g of powder prepared by mixing 62 wt. % of -200 mesh Al powder, 18 wt.% of -325 mesh $B_4C$ powder, 20 wt.% of -200 mesh $B_2O_3$ powder, and 1 wt.% of -325 mesh Mg powder was hot-pressed in the same procedure as Example 1,in order to obtain a sample having a disc shape.

The disc sample was subjected to solution treatment as the same as Example 1, and was subjected to the tests as the same as Example 1.

The result is shown in Table 1.

The sample contained 20.0 wt.% B and 60.6 wt.% Al. Boron existed as the compound of $Al_3BC$.

The mass loss resulting from the acid treatment test was as large as 42.5 wt.%. Nevertheless, the sample was porous material, and the remained $AlB_2$ and $Al_3BC$ as main remaining compounds formed the respective continuous phases.

The sample, after the molten salt corrosion test, showed no change in appearance, and no abnormality was found out on the cutting portion. The sample is conceived to have extremely high corrosion resistance to the chloride-bearing molten salt owing to the existence of the continuous phases of $AlB_2$, $Al_3BC$, and $Al_2O_3$ and the existence of $MgAl_2O_4$.

Example 8

A 100 g of powder prepared by mixing 84 wt.% of -200 mesh Al powder, 16 wt.% of -325 mesh $CaB_6$ powder, and 1 wt.% of -200 mesh Mg powder was hot-pressed in the same procedure as Example 1, in order to obtain a sample having a disc shape.

The disc sample was subjected to solution treatment as the same as Example 1, and was subjected to the tests as the same as Example 1.

The result is shown in Table 1.

The sample contained 9.7 wt.% B and 82.1 wt.% Al. Boron existed as the compound of $AlB_2$.

The mass loss resulting from the acid treatment test was as large as 85.8 wt.%. Nevertheless, the sample was porous material and the remained $AlB_2$ as main remaining compound formed continuous phase.

The sample, after the molten salt corrosion test, showed no change in appearance and no abnormality was found out on the cutting portion. The sample is conceived to have extremely high corrosion resistance to the chloride-bearing molten salt owing to the existence of continuous phase of $AlB_2$ and of $Al_2Ca$ and the existence of MgO and $MgAl_2O_4$.

Example 9

A 100 g of powder prepared by mixing 70 wt. % of -200 mesh Al powder and 30 wt.% of -325 mesh $B_4C$ powder was hot-pressed as the same procedure as Example 1, in order to obtain a sample having a disc shape.

The disc sample was subjected to solution treatment at 1,200°C, and was subjected to the tests as the same as Example 1. The conditions of the solution treatment were as the same as Example 1, other than the corresponding temperature.

The result is shown in Table 1.

The sample contained 23.5 wt.% B and 69.5 wt. % Al. Boron existed as compounds of $AlB_2$, $Al_3BC$, $AlB_{12}$, and $AlB_{12}C_2$.

The mass loss resulting from the acid treatment test was as large as 66.0 wt.%. Nevertheless, the sample was porous material, and the remained $AlB_2$, $AlB_{12}$, and $AlB_{12}C_2$ as main remaining compounds formed the respective continuous phases. It is also conceived that $Al_3BC$ formed a continuous phase similar to the case of $AlB_2$, though the $Al_3BC$ dissolves in acid.

The sample, after the molten salt corrosion test, showed no change in appearance, and no abnormality was found on the cutting portion. The sample is suggested to have extremely high corrosion resistance to the chloride-bearing molten salt owing to the existence of continuous phases of $AlB_2$, $Al_3BC$, $AlB_{12}$, and $AlB_{12}C_2$.

Comparative Example 1

A 100g of -200 mesh surface-oxidized Al powder (1.8 wt.% of oxygen concentration) was hot-pressed in the same procedure as Example 1, in order to obtain a sample having a disc shape.

The disc sample was subjected to solution treatment and to tests as same Example 1.

The result is shown in Table 1.

The sample contained 0.0 wt.% B and 97.8 wt.% Al.

After the acid-treatment test, the sample was powdered, failing to maintain the original shape.

After the molten salt corrosion test, the sample was whitened and became brittle. The reason why the phenomenon happened is the following. It is known that Al coated by $Al_2O_3$ coating possesses the characteristic of highly favorable corrosion resistance. However, in the temperature range of Al melting point or above, the $Al_2O_3$ coating is damaged by expansion of the material. Here, the Al melting causes such expansion within such a temperature range. Furthermore, the chlorinated Al volatilizes, simultaneously with the oxidized Al by $Cl_2$ gas. As a result, the Al becomes brittle.

Comparative Example 2

A sample of INCONEL 625 having a size of 10 x 20 x 30 mm, containing 62 wt.% Ni, 21 wt.% Cr, 9 wt.% Mo, and 4 wt.% Nb was subjected to the molten salt corrosion test as the same condition as Example 1.

The result is shown in Table 1.

The sample was covered with scale over the whole surface area. But, Separation of cladding was found out. The reason why such separation happens is that the chloride-bearing molten salt makes the sample easy to be corrosive.

Table 1

| Test | Element analysis | | | | | | | | Crystal phase determined by XRD | Acid treatment | | Molten salt corrosion |
|---|---|---|---|---|---|---|---|---|---|---|---|---|
| | B | Al | C | Mg | Ca | Si | N | O | | Shape | Mass loss (wt. %) | |
| Example 1 | 23.5 | 69.5 | 6.5 | 0 | 0 | 0 | 0 | 0.5 | $Al_3BC$, $AlB_2$, $Al$, $Al_2O_3$ | Porous body | 60.3 | No change occurred |
| Example 2 | 3.9 | 94.4 | 1.1 | 0 | 0 | 0 | 0 | 0.6 | $Al_3BC$, $AlB_2$, $Al$, $Al_2O_3$ | Porous body | 92.2 | No change occurred |
| Example 3 | 22.7 | 67.1 | 6.3 | 0 | 0 | 0 | 0 | 0.5 | $Al_3BC$, $AlB_2$, $Al$, $Al_2O_3$, $AlN$ | Porous body | 51.6 | No change occurred |
| Example 4 | 9.3 | 69.5 | 0 | 0 | 0 | 0 | 0 | 21.2 | $AlB_2$, $Al$, $Al_2O_3$, $Al_4B_2O_9$, $Al_6B_8O_2$ | Porous body | 55.0 | No change occurred |
| Example 5 | 15.7 | 49.7 | 13.3 | 0 | 0 | 21.0 | 0 | 0.3 | $Al_3BC$, $AlB_2$, $Al$, $Al_2O_3$, $SiC$ | Porous body | 42.5 | No change occurred |
| Example 6 | 29.5 | 50.6 | 8.2 | 0 | 0 | 0 | 11.4 | 0.3 | $Al_3BC$, $AlB_2$, $Al$, $AlN$, $BN$, $B_4C$ | Porous body | 49.6 | No change occurred |
| Example 7 | 20.0 | 60.6 | 3.9 | 1.0 | 0 | 0 | 0.7 | 14.5 | $Al_3BC$, $AlB_2$, $Al$, $Al_2O_3$, $MgAl_2O_4$ | Porous body | 32.1 | No change occurred |
| Example 8 | 9.7 | 82.1 | 0 | 1.0 | 6.0 | 0 | 0 | 1.2 | $AlB_2$, $Al_3Ca$, $Al$, $MgO$, $MgAl_2O_4$ | Porous body | 85.8 | No change occurred |
| Example 9 | 23.5 | 69.5 | 6.5 | 0 | 0 | 0 | 0 | 0.5 | $Al_3BC$, $AlB_2AlB_{12}$, $AlB_{12}C_2$, $Al$, $Al_2O_3$ | Porous body | 66.0 | No change occurred |
| Comparative Example 1 | 0 | 97.8 | 0 | 0 | 0 | 0 | 0.4 | 1.8 | $Al$, $Al_2O_3$, $AlN$ | Powder | – | Embrittled |
| Comparative Example 2 | – | – | – | – | – | – | – | – | – | – | – | Scaled, Separated |

Example 10

A SUS304 steel tube, whose nominal diameter of 20A (JIS) (27.2 mm in outer diameter and 21.6 mm in inner diameter) has 550 mm in length. An E-glass fiber braided sleeve having 40 mm in nominal inner diameter and 1 to 1.2

11

mm in nominal thickness is attached to the outer surface of the SUS304 steel tube. Al tube of JIS A 6063 TD (40 mm in outer diameter and 37 mm in inner diameter) has 500 mm in length. And a fixing container made of graphite tube (100 mm in outer diameter and 40.2 mm in inner diameter) has 550 mm in length. The above-mentioned three devices were located coaxially (in the concentric circle). A powder prepared by mixing 50 wt. % of -200 mesh Al powder, 50 wt. % of -325 mesh $B_4C$ powder, and 1 wt.% of -325 mesh Mg powder was filled with into the gap located between the steel tube and the Al tube. Before and after filling the gap with the powder, each mullite inorganic blanket was inserted into the gap between the steel tube and the Al tube. Each end of the gap is used for trapping the filled powder. Here, the blanket has 37 mm in outer diameter, 27.2 mm in inner diameter and 6 mm in thickness.

The integrated unit of the steel tube, the Al tube, and the fixing container filled with the powder was located in a heating furnace in a horizontal axis position. After evacuating the atmosphere in the furnace, the atmosphere was replaced with nitrogen gas at gas pressure of 0.11 MPa. The furnace was heated to the temperature degree of 700°C. The speed to rise the temperature is 10°C/min., during keeping the internal pressure. After keeping the state for 7 hours, the integrated unit was cooled.

The clad steel tube was taken out from the fixing container, and the inorganic material blanket on each end was removed. Then, the weight of the clad steel tube was measured. The weight of the cladding layer increased by 3.52 wt.%. The increase in the weight results from the nitridation of Al. The outer diameter was measured to 37.4 mm, which was comparatively larger than the inner diameter of the Al tube, 37 mm. The thickness of the separation layer was 0.62 mm.

The sample was prepared, made of the clad steel tube. The sample was subjected to determine the bulk density and the void percentage of the cladding layer. And similar to Example 1, the element analysis, determining the crystal phase by XRD and the molten salt corrosion test was done. Such molten salt corrosion test was done at 650°C.

The result is shown in Table 2.

The bulk density and the void percentage of the cladding layer were 2.57 g/cc and 3.5%, respectively.

The cladding layer contained 21. 6 wt. % B and 67.9 wt. % Al. Boron existed as the compound of $AlB_2$ and of $Al_3BC$.

After the molten salt corrosion test, the sample showed no change in appearance, and no abnormality was found out on the cutting portion. The sample is conceived to have extremely high corrosion resistance to the chloride-bearing molten salt owing to the existence of continuous phase of $AlB_2$ and of $Al_3BC$.

Example 11

Using the steel tube, the Al tube, and the fixing container as same as Example 10, a powder prepared by mixing 35 wt.% of - 200 mesh Al powder, 15 wt. % of -325 mesh $B_4C$ powder, 50 wt. % of - 200 mesh SiC powder, and 1 wt. % of -325 mesh Mg powder was filled with into the gap between the steel tube and the Al tube. The same heat treatment as Example 10 was applied to the tubes, whose tube was similar to the clad steel tube.

The clad steel tube was weighed. The weight of the cladding layer increased by 5.39 wt.%. The increase in the weight results from nitriding Al. The outer diameter was measured. The diameter was 37.1 mm, which was approximately as the same as the inner diameter of the Al tube, 37 mm. The thickness of the separation layer was 0.51 mm.

Similar to Example 10, the sample was subj ected to determine the bulk density and the void percentage of the cladding layer. And similar to Example 1, the sample was subjected to the element analysis, to determine the crystal phase by XRD, and to the molten salt corrosion test. The molten salt corrosion test was done at 650°C.

The result is shown in Table 2.

The bulk density and the void percentage of the cladding layer were 2.69 g/cc and 2.7%, respectively.

The cladding layer contained 6.8 wt.% B and 58.6 wt.% Al. Boron existed as the compound of $AlB_2$ and of $Al_3BC$.

After the molten salt corrosion test, the sample showed no change in appearance, and no abnormality was found on the cutting portion. The sample has the characteristic of extremely high corrosion resistance to the chloride-bearing molten salt, owing to the existence of the continuous phase of $AlB_2$ and of $Al_3BC$.

Example 12

Using the steel tube, the Al tube, and the fixing container as the same as Example 10, a powder prepared by mixing 50 wt.% of -200 mesh Al powder, 20 wt.% of -325 mesh $B_4C$ powder, 30 wt.% of -200 mesh BNC powder, and 1 wt.% of -325 mesh Mg powder were filled with into the gap between the steel tube and the Al tube. The same heat treatment as Example 10 was applied to the tubes, which was made of the clad steel tube. The BNC powder was as the same as the BNC powder used in Example 6.

The clad steel tube was weighed. The cladding layer showed increasing in weight by 4.61 wt.%. The increase in the weight results from nitriding Al. The measured outer diameter was 36. 8 mm, which was approximately smaller than the inner diameter of the Al tube, 37 mm. The thickness of the separation layer was 0.45 mm.

Similar to Example 10, the sample was subj ected to determine the bulk density and the void percentage of the cladding layer. And similar to Example 1, the sample was subjected to analyze the element, to determine the crystal phase by XRD, and to test the molten salt corrosion. Testing the molten salt corrosion was done at 650°C.

The result is shown in Table 2.

The bulk density and the void percentage of the cladding layer were 2.52 g/cc and 4.6%, respectively.

The cladding layer contained 16.1 wt.% B and 68.7 wt.% Al. Boron existed as the compound of $AlB_2$ and of $Al_3BC$, and as unreacted $B_4C$.

The sample after the molten salt corrosion test showed no change in appearance, and no abnormality was found on the cutting portion. The sample is conceived to have extremely high corrosion resistance to the chloride-bearing molten salt owing to the existence of continuous phase of $AlB_2$ and of $Al_3BC$.

Example 13

Using the steel tube, the Al tube, and the fixing container as the same as Example 10, a powder prepared by mixing 60 wt.% of -200 mesh Al powder, 10 wt.% of -325 mesh $B_4C$ powder, 30 wt.% of -325 mesh $CaB_2$ powder, and 1 wt.% of -325 mesh Mg powder was filled with into the gap between the steel tube and the Al tube. The same heat treatment as Example 10 was applied to the tubes, made of the clad steel tube.

The clad steel tube was weighed. The cladding layer showed increase in the weight by 5.39 wt.%. The increase in the weight results from nitriding Al. The outer diameter was 37.4 mm, which was approximately larger than the inner diameter of the Al tube, 37 mm. The thickness of the separation layer was 0.60 mm.

Similar to Example 10, the sample was subjected to the determine the bulk density and the void percentage of the cladding layer. And similar to Example 1, the element analysis, the determination of crystal phase by XRD, and the molten salt corrosion test was done. The molten salt corrosion test was done at 650°C.

The result is shown in Table 2.

The bulk density and the void percentage of the cladding layer were 2.57 g/cc and 3.5%, respectively.

The cladding layer contained 14.7 wt.% B and 72.6 wt.% Al. Boron existed as compound of $AlB_2$ and of $Al_3BC$.

The sample after the molten salt corrosion test showed no change in appearance, and no abnormality was found out on the cutting portion. The sample is submitted to have extremely high corrosion resistance to the chloride-bearing molten salt owing to the existence of continuous phase of $AlB_2$ and of $Al_3BC$.

Example 14

Using the steel tube, the Al tube, and the fixing container as same as those in Example 10, a powder prepared by mixing 50 wt.% of -200 mesh Al powder, 50 wt.% of -325 mesh $B_4C$ powder, and 1 wt. % of -325 mesh Mg powder was filled with into the gap between the steel tube and the Al tube. The same heat treatment as Example 10 was applied to the tubes, which was made of the clad steel tube. The heat treatment was done at 700°C to keep the sample in the same state for 7 hours. Afterwards, the sample was kept at 1,050°C by 4 hours. And then, the sample was cooled.

The clad steel tube was weighed. The cladding layer showed increase in the weight by 4.21 wt.%. The increase in the weight results from nitriding Al. The measured outer diameter was 37.6 mm, which was approximately larger than the inner diameter of the Al tube, 37 mm. The thickness of the separation layer was 0.44 mm.

Similar to Example 10, the sample was subjected to the determine the bulk density and the void percentage of the cladding layer. And similar to Example 1, the sample was subjected to analyze the element, to determine the crystal phase by XRD, and to test the molten salt corrosion. The molten salt corrosion test was done at 650°C.

The result is shown in Table 2.

The bulk density and the void percentage of the cladding layer were 2.72 g/cc and 1.6%, respectively.

The cladding layer contained 21.9 wt.% B and 67.6 wt.% Al. Boron existed as compound of $Al_3BC$, $AlB_2$, $AlB_{12}$, and of $AlB_{12}C_2$.

The sample after the molten salt corrosion test showed no change in appearance, and no abnormality was detected on the cut section. The sample is subjected to have extremely high corrosion resistance to the chloride-bearing molten salt owing to the existence of continuous phases of $AlB_2$, $Al_3BC$, $AlB_{12}$, and $AlB_{12}C_2$.

## Table 2

| Test | Bulk density (g/cc) | Void percentage (%) | Element analysis | | | | | | | | | Crystal phase determined by XRD | Molten salt corrosion |
|------|------|------|------|------|------|------|------|------|------|------|------|------|------|
| | | | B | Al | C | Mg | Ca | Si | N | O | | |
| Example 10 | 2.57 | 3.5 | 21.6 | 67.9 | 6.0 | 0.6 | 0 | 0.2 | 3.1 | 0.6 | $Al_3BC$, $AlB_2$, Al, AlN, $MgAl_2O_4$ | No change occurred |
| Example 11 | 2.69 | 2.7 | 6.8 | 58.6 | 10.5 | 0.6 | 0 | 20.3 | 2.7 | 0.5 | $Al_3BC$, $AlB_2$, Al, AlN, $MgAl_2O_4$, SiC | No change occurred |
| Example 12 | 2.52 | 4.6 | 16.1 | 68.7 | 4.5 | 0.6 | 0 | 0.2 | 9.3 | 0.6 | $Al_3BC$, $AlB_2$, Al, AlN, $MgAl_2O_4$, BN, $B_4C$ | No change occurred |
| Example 13 | 2.57 | 3.5 | 14.7 | 72.6 | 1.2 | 0.8 | 6.4 | 0.2 | 3.3 | 0.8 | $Al_3BC$, $AlB_2$, Al, AlN, $MgAl_2O_4$, MgO, $Al_2Ca$ | No change occurred |
| Example 14 | 2.72 | 1.6 | 21.9 | 67.6 | 6.0 | 0.6 | 0 | 0.2 | 3.3 | 0.4 | $Al_3BC$, $AlB_2$, Al, AlN, $MgAl_2O_4$, $AlB_{12}$, $AlB_{12}C_2$ | No change occurred |

## Claims

1. A material resistant to chloride-bearing molten salt corrosion, comprising 40 to 99 wt.% Al, 1 to 45 wt.% B, and a compound containing Al and B.

2. The material resistant to chloride-bearing molten salt corrosion of claim 1, wherein the B content is 3 to 30 wt.%.

3. The material resistant to chloride-bearing molten salt corrosion of claim 1, wherein the compound containing Al and B forms a continuous phase.

4. The material resistant to chloride-bearing molten salt corrosion of claim 2, wherein the compound containing Al and B forms a continuous phase.

5. The material resistant to chloride-bearing molten salt corrosion of claim 3 further containing an Al phase.

6. The material resistant to chloride-bearing molten salt corrosion of claim 4 further containing an Al phase.

7. The material resistant to chloride-bearing molten salt corrosion of claim 3, wherein the compound containing Al and B is at least one compound selected from the group consisting of $AlB_2$, $AlB_{12}$, $Al_3BC$, and $AlB_{12}C_2$.

8. The material resistant to chloride-bearing molten salt corrosion of claim 4, wherein the compound containing Al and B is at least one compound selected from the group consisting of $AlB_2$, $AlB_{12}$, $Al_3BC$, and $AlB_{12}C_2$.

9. The material resistant to chloride-bearing molten salt corrosion of claim 5, wherein the compound containing Al and B is at least one compound selected from the group consisting of $AlB_2$, $AlB_{12}$, $Al_3BC$, and $AlB_{12}C_2$.

10. The material resistant to chloride-bearing molten salt corrosion of claim 6, wherein the compound containing Al and B is at least one compound selected from the group consisting of $AlB_2$, $AlB_{12}$, $Al_3BC$, and $AlB_{12}C_2$.

11. The material resistant to chloride-bearing molten salt corrosion of claim 7, wherein the compound consists of $AlB_2$ and $Al_3BC$.

12. The material resistant to chloride-bearing molten salt corrosion of claim 8, wherein the compound consists of $AlB_2$ and $Al_3BC$.

13. The material resistant to chloride-bearing molten salt corrosion of claim 9, wherein the compound consists of $AlB_2$ and $Al_3BC$.

14. The material resistant to chloride-bearing molten salt corrosion of claim 10, wherein the compound consists of $AlB_2$ and $Al_3BC$.

15. A method for manufacturing material resistant to chloride-bearing molten salt corrosion, comprising the steps of:

preparing a mixture of Al with at least one compound selected from the group consisting of $B_4C$, $B_2O_3$, and $CaB_6$;and,
heating the mixture in an inert gas atmosphere to temperatures of 600°C - 1,200°C.

16. A steel tube of a heat exchanger, comprising the steel tube and a cladding of the material resistant to chloride-bearing molten salt corrosion on an outer surface of the steel tube, wherein the material resistant to chloride-bearing molten salt corrosion is the material according to any one of claims 1-14.

17. The steel tube of the heat exchanger of claim 16, wherein a separation layer is located between the material resistant to chloride-bearing molten salt corrosion and the outer surface of the steel tube.

18. The steel tube of the heat exchanger of claim 17, wherein the separation layer is made of a ceramic fiber material.

19. A method for manufacturing steel tube of heat exchanger comprising the steps of:

positioning an Al tube around an inner steel tube, wherein the Al tube has a larger inner diameter than an outer diameter of the inner steel tube;
filling a mixture of Al and at least one compound selected from the group consisting of $B_4C$, $B_2O_3$, and $CaB_6$

between the steel tube and the Al tube; and,
heating the steel tube and the Al tube filled with the mixture to temperature of 600°C - 1,200°C, wherein the heating is done in nitriding gas atmosphere.

**20.** The method for manufacturing steel tube of heat exchanger of claim 19, wherein the steel tube has a separation layer at outer surface thereof.

**21.** The method for manufacturing steel tube of heat exchanger of claim 20, wherein the separation layer is made of a ceramic fiber material.

**22.** The heat exchanger comprising the steel tube of the heat exchanger, according to any one of claims 16-18.

FIG. 1

FIG. 2

FIG. 3

FIG. 4

FIG. 5

FIG. 6

FIG. 7

FIG. 8

FIG. 9

| INTERNATIONAL SEARCH REPORT | International application No. |
|---|---|
| | PCT/JP02/07416 |

A. CLASSIFICATION OF SUBJECT MATTER
  Int.Cl⁷ C22C32/00, 29/14

According to International Patent Classification (IPC) or to both national classification and IPC

B. FIELDS SEARCHED

Minimum documentation searched (classification system followed by classification symbols)
  Int.Cl⁷ C22C21/00-18, 29/00-29/18, 32/00

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 62-1834 A (Kobe Steel, Ltd.), 07 January, 1987 (07.01.87), | 1-10,15-18, 22 |
| A | (Family: none) | 11-14,19-21 |
| Y | JP 61-235523 A (Kobe Steel, Ltd.), 20 October, 1986 (20.10.86), | 1-10,16-18, 22 |
| A | (Family: none) | 11-15,19-21 |
| Y | JP 58-100653 A (Matsushita Electric Industrial Co., Ltd.), | 1-10,16-18, 22 |
| A | 15 June, 1983 (15.06.83), (Family: none) | 11-15,19-21 |
| Y | US 5925313 A (Kobe Steel, Ltd.), 20 July, 1999 (20.07.99), | 1-10,16-18, 22 |
| A | & JP 9-165637 A | 11-15,19-21 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 August, 2002 (22.08.02) | 03 September, 2002 (03.09.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

| International application No. |
| --- |
| PCT/JP02/07416 |

| C (Continuation). DOCUMENTS CONSIDERED TO BE RELEVANT | | |
| --- | --- | --- |
| Category* | Citation of document, with indication, where appropriate, of the relevant passages | Relevant to claim No. |
| Y<br>A | WO 01/13057 A1 (NKK Corp.),<br>22 February, 2001 (22.02.01),<br>& EP 1122506 A1      & JP 2001-49379 A<br>& JP 2001-56195 A     & JP 2001-56196 A<br>& JP 2001-56197 A | 16-18,22<br>1-15,19-21 |
| A | JP 48-92237 A (Hitachi, Ltd.),<br>30 November, 1973 (30.11.73),<br>(Family: none) | 1-22 |
| A | JP 4-333542 A (Hashimoto Kasei Kabushiki Kaisha),<br>20 November, 1992 (20.11.92),<br>(Family: none) | 1-22 |
| A | JP 1-312044 A (Hitachi Zosen Corp.),<br>15 December, 1989 (15.12.89),<br>(Family: none) | 1-22 |
| A | JP 2-258675 A (Aso Cement Kabushiki Kaisha),<br>19 October, 1990 (19.10.90),<br>(Family: none) | 1-22 |

Form PCT/ISA/210 (continuation of second sheet) (July 1998)